Europäisches Patentamt

European Patent Office

Office Européen des brevets

(19)

(11) Publication number: **0 277 406 B1**

# (12) EUROPEAN PATENT SPECIFICATION

(45) Date of publication of patent specification:
02.01.91 Bulletin 91/01

(51) Int. Cl.⁵ : **B01J 13/02**

(21) Application number: **87301045.8**

(22) Date of filing: **05.02.87**

(54) **Mass production of seamless capsules.**

(43) Date of publication of application:
**10.08.88 Bulletin 88/32**

(45) Publication of the grant of the patent:
**02.01.91 Bulletin 91/01**

(84) Designated Contracting States:
**DE FR GB IT SE**

(56) References cited:
**DE-B- 2 753 503**
**DE-C- 921 564**
**FR-A- 2 143 394**
**FR-A- 2 387 076**
**US-A- 4 279 632**

(72) Inventor: **Lew, Chel Wing**
**9218 Old Homestead**
**San Antonio Texas 78203 (US)**
Inventor: **Hamil, Henry Fritz Johnston Atoll**
**Laboratory**
**Johnston Island P.O. Box 237**
**APO San Francisco, CA 96305 (US)**
Inventor: **Jones, Gene Author**
**6714 Peachtree**
**San Antonio Texas 78238 (US)**

(74) Representative: **Meddle, Alan Leonard et al**
**FORRESTER & BOEHMERT**
**Widenmayerstrasse 4/I**
**D-8000 München 22 (DE)**

(73) Proprietor: **SOUTHWEST RESEARCH**
**INSTITUTE**
**Post Office Drawer 28510 6220 Culebra Road**
**San Antonio, TX 78284 (US)**

EP 0 277 406 B1

## Description

This invention relates to improvements in the mass production of seamless capsules.

U.S.-Patent No. 3,015,128 shows a rotating head to which filler and shell material may be supplied and having orifices thereabout from which a succession of capsules having wet or unhardened shells are flung outwardly and then collected on the surface of a hardening bath arranged about the device. US-Patent No. 3,310,612 shows another rotating encapsulating head having a nozzle from which concentric rods of filler and shell material are extruded and then cause to break off into a succession of individual capsules due to centrifugal action. In both cases, however, the capsules were often ruptured or deformed upon impact with the bath, or by collision with other capsules in the bath.

US-Patent No. 3,389,194 shows apparatus from which concentric rods of the filler and shell material are extruded into a confined stream of carrier fluid flowing at a rate which causes the rods to elongate and break off into a succession of capsules. As described, the shell of the capsule may be a "hot melt" such as wax which is hardened by controlled cooling of the carrier fluid following formation of the capsules. Alternatively, the shell may be a material which is hardened by chemical reaction with a hardening medium within a liquid bath into which the wet capsules are introduced along with the carrier medium. In either event, the suspension of capsules in the carrier fluid minimizes damage due to collision with other capsules.

Apparatus of this latter type is, however, labor and energy intensive. Thus, among other things, it requires the continued maintenance of desired temperature levels of not only the rods to be extruded, but also the carrier fluid. Still further, as in the case of the encapsulating heads above described, there is a tendency for the capsules to be damaged by colliding with one another in the bath. Also, in the production of cold water soluble capsules, hardening of the shell material (e.g., aqueous sodium alginate) in a liquid hardening medium (e.g., a calcium chloride solution) causes such complete polymeric cross linking as to prevent or at least extend the time required to dissolve the capsule.

Efforts have been made to partially harden the shells of capsules delivered from an encapsulating head, and thereby prevent their deformation upon contact with the hardening bath, by causing them to fall freely through a cool air zone. However, in the case of relatively large capsules, it was found necessary to drop them such a large distance as to require very large and expensive equipment for this purpose. For example, although satisfactory water capsules of less than 1400 μm diameter were attained with a free air drop of about 183 cm (six feet), water capsules of greater than 1700 μm diameter were not obtained even with a drop of 823 cm (twenty seven feet).

It has also been proposed to minimize the shell thickness of cross-linked polymers by collecting them on a bed of starch. This of course is costly and time consuming.

It is therefore the primary object of this invention to enable the mass production of such capsules by causing them to be hardened by cooling, or by polymeric cross linking or other chemical reaction, with equipment which requires relatively little labor and energy and which may be relatively small and inexpensive to manufacture.

It is another object to enable the mass production of such capsules with little likelihood of their being damaged due to collision with one another upon collection.

These and other objectives are accomplished, in accordance with the present invention, by apparatus for as well as a method of forming such capsules in which a succession of wet or unhardened capsules are caused to pass through mist, as they fall freely onto a surface from which they may be collected, in order to partially harden their shells to the extent necessary to prevent their deformation upon impact with the surface. In one embodiment of the invention, the mist is maintained at a temperature which partially hardens the shells by cooling. In another embodiment, the mist is a material which partially hardens the shells by chemical reaction. Preferably, the mist is collected as it condenses and then converted back to mist for use in partially hardening additional capsules.

The mist is a sufficiently fine dispersion of liquid which, regardless of its temperature and/or composition, and as compared with a spray, tends to remain suspended, thereby providing not only longer contact but also larger surface areas for contact with the wet capsules. More particularly, the mist is quite dense so as contact the largest possible surface area of the shells, but without damaging them upon impact, as might occur in the case of a spray of larger liquid particles.

As a result, it has been possible to partially harden the shells of hot melt capsules to the extent necessary with only a relatively short free fall. Thus, for example, satisfactory water capsules were produced with only a 244 cm (an eight foot) free drop through mist. Also, of course, it is possible to partially harden shells of a wide range of chemical compositions due to the wide range of chemical reaction materials available in mist form. More particularly, the invention has been found particularly useful in the production of cold water soluble capsules in that it enables the extent of polymeric cross-linking to be accurately controlled during the relatively short fall through the mist zone.

In the drawings wherein like reference characters are used throughout to designate like parts :

Fig. 1 is a diagrammatic vertical sectional view of apparatus constructed in accordance with the present invention ; and

Fig. 2 is a top plan view of the apparatus of Fig. 1, as seen along broken lines 2-2 of Fig. 1.

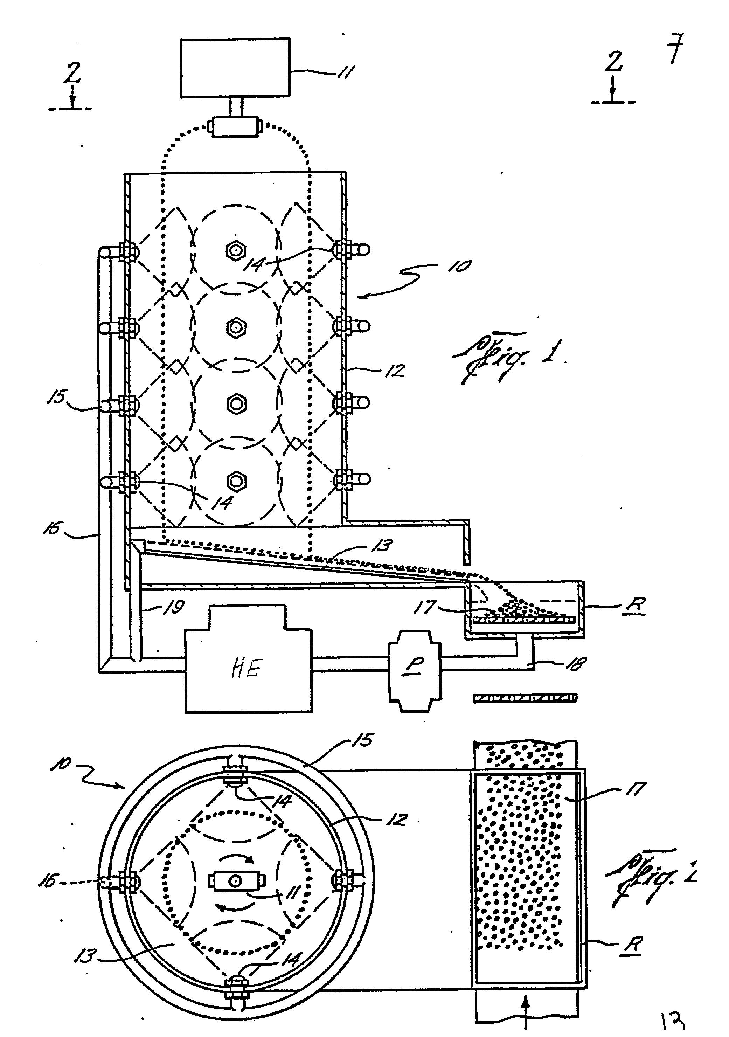

With reference now to the details of the above described drawings, an encapsulating device indicated in its entirety by reference character 10 and including a rotatable encapsulating head 11 is mounted above a container or shroud 12 extending vertically between the head and the surface of a collecting device 13 beneath the lower end of the shroud. The encapsulating head may be of any well known construction, such as that shown in the aforementioned prior US-patent 3,310,612 having at least one nozzle arranged about its circumference and adapted to be rotated at a speed sufficient to cause concentric rods of filler and shell material to be extruded therefrom and then broken off into a succession of wet capsules "C". As shown in each of Fig. 1 and 2, shroud 12 is of a sufficiently large diameter as to surround the generally cylindrical pattern of the capsules which fall freely through it and onto the collection device 13.

A plurality of atomizing devices 14 are mounted on the side of the shroud 12 so as to deliver hardening medium in the form of mist or fog into the zone within the shroud through which the capsules fall. This medium, which may be water, is delivered to the devices through manifolds 15 arranged about the shroud and adapted to receive the water from a vertical supply line 16. As indicated in broken lines, the arrangement of the atomizing devices 14 is such that the generally conical pattern of mist from each is adapted to overlap with that of adjacent heads to thereby provide the maximum density of mist through which the capsules fall. The temperature of the medium, and thus the mist, is suitably controlled by a heat exchanger "HE" disposed within the supply line 16 intermediate the manifold 15 and a pump P connected to the water source.

In the preferred and illustrated embodiment of the invention, the mist is collected as it condenses on the device 13, and then delivered to the pump in order to recirculate it through the manifold and into the atomizing device which convert it to mist for hardening additional capsules. Thus, as shown in Fig. 1 and 2, the capsules and the mist flow downwardly over an inclined surface of the collection device into a reservoir R having a screen 17 on which the capsules are separated from the condensed mist which passes through the screen and into a line 18 leading from the reservoir to the pump P. As indicated in Fig. 2, the screen comprises a movable conveyer for delivering the capsules to areas in which they may be dried, sized, etc. As indicated in Fig. 1, the condensed mist will form a liquid level within the reservoir above the screen 17.

As also shown in Fig. 1, part of the condensed mist is diverted from the supply line 16 into a conduit 19 for delivery to the upper surface of the collecting device 13 to form a film which flows downwardly thereover into the reservoir. Thus, the partially hardened capsules which fall freely through the shroud 12 will tend to assume a "first-in, first-out" pattern, as they are carried with the film into the reservoir R, thereby minimizing the possibility of impact with one another and optimizing uniform hardening of all the shells by causing each to in contact with the film for substantially the same period of time. The inclination of the top surface of the collecting device at a relatively small angle, such as 10°, with respect to the horizontal, is also useful in lessening the effect on the impact of the capsules therewith in that it lessens the kinetic energy of the capsules required to change their direction as they move downwardly over the liquid film.

As previously described, the height of the shroud 12 and thus the misting zone is only that required to harden the shells of the capsules to the extent necessary that they will not be damaged upon impact with the surface of the collecting device. Thus, as previously indicated, we have found that in the formation of hot melt capsules, of relatively large sizes of 1700 µm or greater diameter, the misting zone need not be greater than 183 to 244 cm (six to eight feet).

The height of the misting zone, as well as the temperature of the mist, required to produce partial hardening of the shells of the capsules will, of course, depend on the composition of the capsules, particularly the shell material. In any event, the invention contemplates that hot melt capsules of a wide range of composition may be produced, with the filler materials being liquid or gas, as desired, and the shell materials being was or other material which is solid at room temperature, but which may be heated to a liquid form for use in forming wet capsules from the encapsulating device. It is also contemplated, of course, that an encapsulating device other than the centrifugal rotating head illustrated and described may be used.

As also mentioned, the invention contemplates partial hardening of the capsules by polymeric cross-linking or other chemical reaction. Thus, it has been found especially useful in the formation of cold water soluble capsules in that it permits controlled polymeric cross-linking, and thus the formation of capsules which are readily soluble for their intended purposes. For example, it has been found possible to form such capsules with the above described apparatus wherein the shell material is aqueous sodium alginate, and the mist is five percent by weight of an aqueous calcium chloride solution. In this case, the mist provides calcium ion exchange with sodium in the shell material to effect the necessary chemical hardening.

From the foregoing it will be seen that this invention is one well adapted to attain all of the ends and objects hereinabove set forth, together with other advantages which are obvious and which are inherent to the method and apparatus.

## Claims

1. A method of mass producing seamless capsules by forming a succession of individual capsules each having a fill material contained within a continuous, unhardened shell, and causing the capsules to fall freely through mist which hardens their shells to the extent necessary to prevent their deformation upon impact with the surface of a collection medium.

2. A method as defined in claim 1, wherein the temperature of the mist is so controlled as to partially harden the shells by cooling them.

3. A method as defined in claim 1 wherein the composition of the mist is such that it partially hardens the shells by chemical reaction.

4. A method as defined in claim 1, characterized by the further steps of collecting the mist as it condenses, and converting the condensate to mist for use in partially hardening the shells of additional capsules.

5. Apparatus for use in mass producing seamless capsules, comprising means for forming a succession of individual capsules each having a filler material contained within a continuous, unhardened shell, means including a surface upon which the capsules may be collected upon falling freely from the forming means, and means for supplying mist to a zone through which the capsules fall in order to partially harden their shells to the extent necessary to prevent their deformation upon impact with said surface.

6. Apparatus as defined in claim 5, wherein means for maintaining the mist at a temperature which partially hardens the shells by cooling.

7. Apparatus as defined in claim 5, wherein the mist is of such composition as to partially harden the shells by chemically reacting therewith.

8. Apparatus as defined in claim 5, wherein means for collecting mist, as it condenses, and recirculating the condensate to the mist supplying means where it is converted to mist for use in partially hardening additional capsules.

9. Apparatus as defined in claim 5, wherein the collecting means includes a liquid film which flows downwardly over the surface at a relatively small angle to the horizontal.

## Ansprüche

1. Verfahren zur Massenherstellung von nahtlosen Kapseln, dadurch gekennzeichnet, daß man eine Aufeinanderfolge von einzelnen Kapseln bildet, von denen jede ein Füllmaterial aufweist, das in einem kontinuierlichen, nicht-gehärteten Mantel enthalten ist, und die Kapseln in freiem Fall durch einen Nebel fallen läßt, der ihre Mäntel soweit aushärtet, daß ihre Deformation beim Zusämmenstoß mit der Oberfläche eines Sammelmediums verhindert wird.

2. Verfahren nach Anspruch 1, dadurch gekennzeichnet, daß die Temperatur des Nebels so gesteuert wird, daß die Mäntel teilweise dadurch ausgehärtet werden, daß man sie abkühlt.

3. Verfahren nach Anspruch 1, dadurch gekennzeichnet, daß die Zusammensetzung des Nebels derart ist, daß die Mäntel durch chemische Reaktion teilweise ausgehärtet werden.

4. Verfahren nach Anspruch 1, dadurch gekennzeichnet, daß man weiterhin den Nebel auffängt, wenn er kondensiert, und das Kondensat zur Verwendung beim teilweisen Aushärten der Mäntel zusätzlicher Kapseln in Nebel überführt.

5. Vorrichtung zur Verwendung bei der Massenherstellung nahtloser Kapseln, die Mittel zum Bilden einer Aufeinanderfolge von einzelnen Kapseln, von denen jede ein Füllmaterial aufweist, das in einem kontinuierlichen, nicht-gehärteten Mantel enthalten ist, Mittel, die eine Oberfläche einschließen, auf der die Kapseln nach dem freien Fall aus den Bildungsmitteln gesammelt werden können, und Mittel zum Zuführen von Nebel zu einer Zone umfaßt, durch die die Kapseln fallen, um ihre Mäntel teilweise soweit auszuhärten, wie notwendig ist, um ihre Deformation beim Zusammenstoß mit besagter Oberfläche zu verhindern.

6. Vorrichtung nach Anspruch 5, gekennzeichnet durch Mittel zum Halten des Nebels bei einer Temperatur, welche die Mäntel durch Abkühlen teilweise aushärtet.

7. Vorrichtung nach Anspruch 5, dadurch gekennzeichnet, daß der Nebel eine derartige Zusammensetzung hat, daß er die Mäntel dadurch teilweise aushärtet, daß er chemisch mit ihnen reagiert.

8. Vorrichtung nach Anspruch 5, gekennzeichnet durch Mittel zum Auffangen des Nebels, wenn er kondensiert, und zum Zurückführen des Kondensats zu den Nebel-Zuführmitteln, wo er zur Verwendung beim teilweisen Aushärten zusätzlicher Kapseln in Nebel überführt wird.

9. Vorrichtung nach Anspruch 5, dadurch gekennzeichnet, daß die Sammelmittel einen flüssigen Film einschließen, der über die Oberfläche in einem relativ kleinen Winkel zur Waagerechten nach unten fließt.

## Revendications

1. Un procédé de production en série de capsules sans joint en formant une succession de capsules individuelles possédant chacune une matière de remplissage qui est contenue à l'intérieur d'une enveloppe continue, non durcie, et en amenant les capsules à tomber librement à travers un brouillard qui durcit leurs enveloppes dans la mesure nécessaire pour empêcher leur déformation lors d'un impact avec la surface d'un moyen collecteur.

2. Un procédé selon la revendication 1, dans lequel la température du brouillard est réglée de façon à durcir partiellement les enveloppes en les refroidissant.

3. Un procédé selon la revendication 1, dans lequel la composition du brouillard est telle qu'il durcit partiellement les enveloppes par réaction chimique.

4. Un procédé selon la revendication 1, caractérisé par les étapes additionnelles consistant à collecter le brouillard lorsqu'il se condense et à convertir le condensat en brouillard pour l'utiliser dans un durcissement partiel des enveloppes de capsules additionnelles.

5. Appareil destiné à une utilisation dans une production en série de capsules sans joint, comprenant des moyens pour former une succession de capsules individuelles comportant chacune une matière de remplissage contenue à l'intérieur d'une enveloppe continue, non durcie, des moyens comprenant une surface sur laquelle les capsules peuvent être collectées lorsqu'elles tombent librement depuis les moyens de formage, et des moyens pour amener un brouillard dans une zone à travers laquelle les capsules tombent afin de durcir partiellement leurs enveloppes dans la mesure nécessaire pour empêcher leur déformation lors d'un impact avec ladite surface.

6. Appareil selon la revendication 5, comprenant des moyens pour au moins tenir le brouillard à une température qui durcit partiellement les enveloppes par refroidissement.

7. Appareil selon la revendication 5, dans lequel le brouillard est d'une composition apte à durcir partiellement les enveloppes en réagissant chimiquement avec elles.

8. Appareil selon la revendication 5, comprenant des moyens pour collecter le brouillard lorsqu'il se condense, et remettre en circulation le condensat vers les moyens d'amenée de brouillard où il est converti en brouillard à utiliser dans un durcissement partiel des capsules additionnelles.

9. Appareil selon la revendication 5, dans lequel les moyens collecteurs comprennent un film liquide qui s'écoule vers le bas au-dessus de la surface selon un angle relativement faible par rapport à l'horizontale.

EP 0 277 406 B1

Fig. 1

Fig. 2